Europäisches Patentamt

European Patent Office

Office européen des brevets

(11) Veröffentlichungsnummer: **0 139 964**
**B1**

(12) **EUROPÄISCHE PATENTSCHRIFT**

(45) Veröffentlichungstag der Patentschrift:
14.10.87

(21) Anmeldenummer: **84109826.2**

(22) Anmeldetag: **17.08.84**

(51) Int. Cl.⁴: **A 47 J 31/42, A 47 J 42/40**

(54) Vorrichtung zur Dosierung von Kaffeepulver an einer Kaffeemaschine.

(30) Priorität: **25.08.83 CH 4649/83**

(43) Veröffentlichungstag der Anmeldung:
**08.05.85 Patentblatt 85/19**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
**CH-A-566 759**
**DE-A-1 929 247**
**FR-A-1 518 759**
**FR-A-2 298 997**
**FR-A-2 301 214**
**GB-A-2 008 394**

(73) Patentinhaber: **Gesamat AG, Margarethenstrasse,**
**CH- 6257 Ballwil (CH)**

(72) Erfinder: **Frei, Hanspeter, Vogelsangstrasse 26, CH-**
**8618 Oetwil am See (CH)**
Erfinder: **Schmed, Arthur, Langrütistrasse 87, CH-**
**8635 Oberdürnten (CH)**

(74) Vertreter: **Rottmann, Maximilian R., c/o Rottmann,**
**Quehl & Zimmermann AG Glattalstrasse 37, CH-**
**8052 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung mit einem Mahlwerk zur Dosierung von Kaffeepulver an einer mit einer Aufbereitungskammer versehenen Kaffeemaschine.

Es sind Kaffeemaschinen mit einem Mahlwerk bekannt, das mit konstanter Geschwindigkeit angetrieben wird. Am Ausgang des Mahlwerks fällt der gemahlene Kaffee in eine Aufbereitungskammer, in welcher er anschliessend mit heissem Wasser oder Wasserdampf aufgebrüht wird. Die Dosierung der Kaffeemenge, welche in die Aufbereitungskammer eingefüllt wird, erfolgt dabei über eine Zeitsteuerung. Gesteuert wird in der Regel die Einschaltdauer für den Motor des Mahlwerks. Unter der bereits erwähnten Voraussetzung, dass der Motor konstante Drehzahl aufweist, lässt sich über die Veränderung der Einschaltzeit für den Motor die in die Aufbereitungskammer fallende Menge an Kaffeepulver dosieren.

Für grössere Maschinen, wie sie beispielsweise in Gaststätten verwendet werden, arbeiten derartige Vorrichtungen an sich zufriedenstellend. Einer Übertragung dieses Konzepts auf eine Haushaltkaffeemaschine steht als wesentlicher Faktor der aufwendige Motor für das Mahlwerk entgegen, der im allgemeinen ein Induktionsmotor ist.

Man hat schon versucht, dieses Problem dadurch zu lösen, dass neben dem Ausgang des Mahlwerks eine Dosierkammer angeordnet wird deren Inhalt nach Füllung der Dosierkammer, in die Aufbereitungskammer entleert werden kann. Eine solche Konstruktion gemäß Oberbegriff des Anspruches 1, ist z. B. in der FR-A-1 518 759 beschrieben. Die Dosierkammer ist dabei mit einem elastisch verformbaren Wandelement ausgerüstet, an welchem ein elektrischer Schalter angeordnet ist. Bei zunehmender Füllung der Dosierkammer wird das Wandelement elastisch verformt, bis es schliesslich den Schalter betätigt, der den Stromkreis zum Motor des Mahlwerkes unterbricht. Nachteilig bei dieser Konstruktion ist insbesondere, dass das vom Mahlwerk ausgeworfene Kaffeepulver einen relativ langen, abgewinkelten Weg zurücklegen muss, bis es auf das elastische Wandelement trifft. Der resultierende und als Messgrösse für die Bestimmung der Menge des Mahlgutes herangezogene Staudruck in der Dosierkammer wird daher zusätzlich von Reibungswiderständen, Staueffekten, Mahlfeinheit und Konsistenz des Kaffeepulvers, allfälliger Festsetzung desselben an den Wänden des Kanals usw. beeinflusst. Diese nicht vorhersehbaren Parameter beeinflussen die Dosierungsmenge des Kaffeepulvers in unzulässiger und unerwünschter Weise.

Aus der FR-A-2 301 214 ist eine ähnliche Vorrichtung bekannt, die diesen Nachteil dadurch zu vermeiden trachtet, dass in der Dosierkammer, gegenüber der Kaffeepulver-Auslassöffnung des Mahlwerks, ein schwenkbar aufgehängtes Wandelement angeordnet ist, das bei Verschwenkung einen Mikroschalter zur Stillsetzung des Motors des Mahlwerks betätigt. Nachteilig bei dieser Lösung ist aber, dass das schwenkbare Wandteil und damit der Mikroschalter durch Störungen wie Erschütterungen, ungleichmässige Ansammlungen des Kaffeepulvers in der Kammer, relativ starker Auswurf von grob gemahlenem Kaffee usw. unerwünscht bzw. unkontrolliert ausgelöst werden kann, was sich in einer zu geringen Dosiermenge niederschlägt.

Beiden Konstruktionen gemeinsam schliesslich ist der Nachteil, dass bei voller Dosierkammer lediglich der Motor des Mahlwerkes ausgeschaltet wird, dass also zusätzliche Steuermittel vorgesehen werden müssen, um die abgemessene Kaffeepulvermenge in die Aufbereitungskammer zu entleeren.

Es ist die Aufgabe der Erfindung, diese Nachteile zu vermeiden und eine einfache, zuverlässig arbeitende Vorrichtung zu schaffen, die bei voller Dosierkammer selbsttätig auch deren Entleerung in die Aufbereitungskammer bewirkt.

Die Erfindung geht von einer Vorrichtung der eingangs genannten Art aus, mit einer am Ausgang des Mahlwerks angeordneten Dosierkammer, welche ein druckempfindliches, elastisch verformbares Wandelement aufweist, an welchem ein Signalgeber angeordnet ist, der ein von der elastischen Verformung des Wandelementes abhängiges Signal erzeugt (FR-A-1 518 759). Um die gestellte Erfindungsaufgabe zu lösen, ist das druckempfindliche, elastisch verformbare Wandelement auf der dem Ausgang des Mahlwerks unmittelbar gegenüberliegenden Seite der Dosierkammer in direkter Verlängerung der Auswurfrichtung des Mahlgutes angeordnet, wobei die Dosierkammer als Auslass ein verschwenkbares Bodenteil aufweist, das vom Signalgeber gesteuert entriegelbar ist.

Damit ist erreicht, dass das elastisch verformbare Wandelement unmittelbar und lediglich vom Staudruck beaufschlagt wird, der bei voller Dosierkammer vom Kaffeepulver ausgeübt wird, so dass sich eine ausserordentlich gleichmässige und exakte Dosierung ergibt, ohne dass auf die zeitlich abhängige Fördermenge des vom Mahlwerk gelieferten Pulvers Rücksicht genommen werden müsste. Die Vorrichtung lässt sich einfach und aus preiswertem Material aufbauen, ohne dass auf den Vorteil verzichtet werden müsste, dass die Dosierkammer, wenn sie voll ist, sofort automatisch entleert wird.

Besondere Ausgestaltungen und Weiterbildungen der erfindungsgemässen Vorrichtung sind in den abhängigen Ansprüchen 2 und 3 definiert.

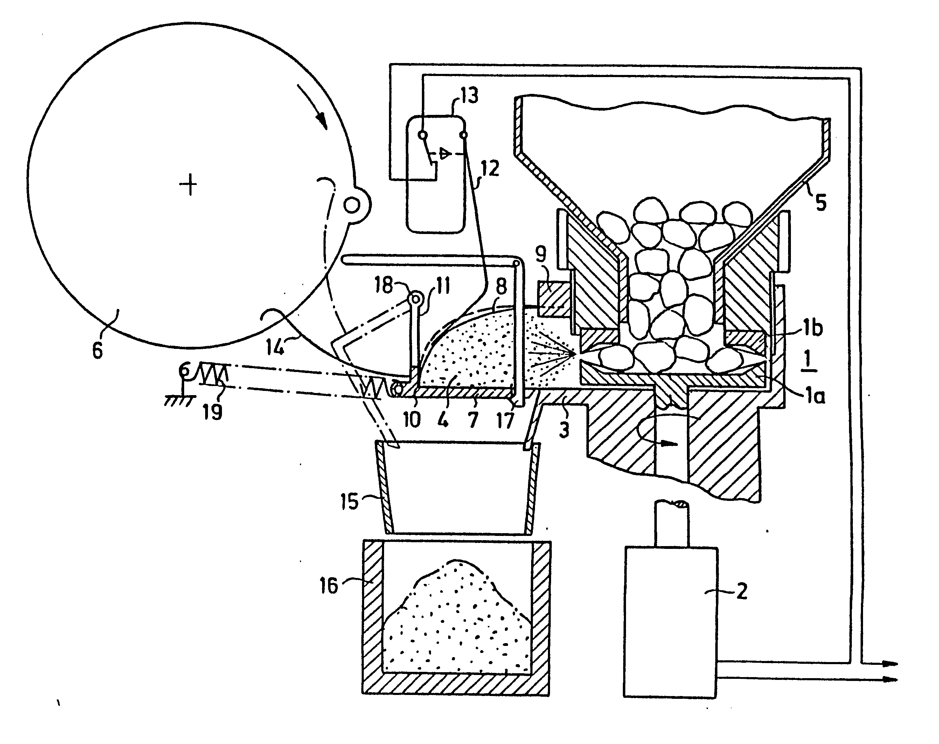

Im folgenden wird ein Ausführunsbeispiel der Erfindung anhand der Zeichnung näher erläutert. Die Figur zeigt die Prinzipskizze eines bevorzugten Ausführungsbeispiels.

Das in der Fig. gezeigte Ausführungsbeispiel besteht aus einem Mahlwerk 1, mit einem unteren angetriebenen Mahlrad 1a und einem oberen Mahlrad 1b. Das obere Mahlrad 1b lässt sich manuell in seinem Abstand gegenüber dem unterem Mahlrad 1a verstellen, wodurch sich der Feinheitsgrad für den Malvorgang einstellen lässt. Das untere Mahlrad 1a wird vom einem Motor 2 angetrieben.

Über dem oberen Mahlrad 1b befindet sich ein Einfülltrichter für die Kaffeebohnen.

Am Auslass des Mahlwerks befindet sich ein Ansatzstutzen 3, durch welchen das Kaffeepulver in eine Dosierkammer 4 vom Mahlwerk geschleudert wird. Die Dosierkammer 4 besteht aus zwei festen parallel zur Zeichenebene liegenden Seitenwänden sowie aus einem nach unten abklappbaren Bodenteil 7. Die dem Ansatzstutzen 3 gegenüberliegende Wand sowie die obere Begrenzung der Dosierkammer 4 wird durch ein gekrümmtes Federblatt 8 gebildet. Das Federblatt 8 ist an seinem oberen Teil mit Hilfe von Befestigungselementen 9, beispielsweise Nieten, an der Struktur der Dosierkammer 4 befestigt. Die untere Kante 10 des Federblattes ist frei beweglich und ist von einem Wandteil 11 geführt.

Auf der Aussenseite des Federblatts 8 befindet sich ein Signalgeber 12, der beispielsweise mit einem elektrischen Mikroschalter oder einem anderen positionsabhängigen Signalgeber in Verbindung steht. Der im Beispiel vorgesehene Mikroschalter 13 liegt in der Zuleitung zum Antriebsmotor 2. Er dient ferner als Kontaktgeber für einen mit dem Bodenteil 7 verbundenen später beschriebenen Verriegelungsmechanismus.

Nach dem Einschalten des Geräts beginnt das Mahlwerk seine Arbeit und schleudert das frischgemahlene Kaffeepulver in die Dosierkammer 4, direkt gegen das Federblatt 8. Das Bodenteil 7 ist zu diesem Zeitpunkt geschlossen. Ist die Dosierkammer 4 mit Kaffeepulver gefüllt, nimmt der vom Mahlwerk ausgeübte Druck auf das Federblatt 8 zu, wodurch sich dieses nach aussen stärker wölbt als in der anfänglichen Ruhestellung und damit den Signalgeber 12 sowie den Mikroschalter 13 betätigt. Dieser öffnet die Stromzufuhr zum Motor 2 und unterbricht damit das Mahlwerk. Gleichzeitig wird ein Verriegelungsmechanismus 17, z. B. eine Klinke oder ein Elektromagnet, betätigt, welcher das um den Drehpunkt 18 unter der Wirkung einer Feder 19 aufklappbare Bodenteil 7 freigibt. Damit klappt das Bodenteil 7 nach unten ab und entleert die Dosierkammer über einen Trichter 15 in eine Aufbereitungskammer 16. In der Aufbereitungskammer 16 wird das Kaffeepulver mit Wasser bzw. Wasserdampf aufgebrüht. Anschliessend wird durch eine Umdrehung einer Nockenscheibe 8 ein Betätigungsmechanismus 14, z. B. eine mit dem Bodenteil 7 verbundene Federklinke, betätigt und dadurch das Bodenteil 7 wieder geschlossen, so dass die Klinke 17 einrastet. Auch an dieser Stelle kann alternativ ein Betätigungsmagnet vorgesehen sein.

Gemäss einem besonderen Ausführungsbeispiel ist der Signalgeber 12 am Mikroschalter 13 einstellbar ausgebildet, wodurch sich der Kontaktpunkt verändern lässt, bei welchem ein bestimmtes Dosierkammervolumen die Kontaktgabe des Schalters 13 auslöst. Auf diese einfache Weise lässt sich die in der Dosierkammer 4 gewünschte Pulvermenge wählen. Das Federblatt 8 biegt sich in diesem Fall je nach Einstellung des Signalgebers 12 mehr oder weniger stark nach aussen durch. Der in der Dosierkammer 4 auftretende vom Mahlwerk verursachte Staudruck des Kaffeepulvers führt also zu Volumenänderungen der Dosierkammer 4, und zwar aufgrund von Formänderungen eines Wandteils, nämlich des Federblatts 8 dieser Kammer.

Anstelle des Mikroschalters 13 lassen sich beliebige andere Schaltelemente oder Sensoren verwenden, beispielsweise Magnetschalter oder Reed-Relais.

Die beschriebene Vorrichtung erlaubt die Verwendung eines äusserst preiswerten Kollektormotors, wobei die Dosiervorrichtung die lastabhängigen Schwankungen der Fördermenge durch das Mahlwerk ausgleicht. Die beschriebene Vorrichtung erlauben die Herstellung einer überraschend preiswerten Kaffemaschine dieser Art, welche sich vom konstruktiven Aufwand und damit vom Preis her vorzüglich als Haushaltkaffemaschine eignet. Sie erlaubt eine sehr genaue Dosierung der gewünschten Kaffeemenge und besitzt mindestens alle Vorteile einer zeitlich gesteuerten Kaffemaschine dieser Art, welche die Möglichkeit bietet, jederzeit Kaffee aus wirklich frisch gemahlenem Kaffeepulver in gewünschter Stärke herzustellen.

**Patentansprüche**

1. Vorrichtung mit einem Mahlwerk (1) zur Dosierung von Kaffeepulver an einer mit einer Aufbereitungskammer (16) versehenen Kaffeemaschine, mit einer am Ausgang (3) des Mahlwerks (1) angeordneten Dosierkammer (4), welche ein druckempfindliches, elastisch verformbares Wandelement (8) aufweist, an welchem ein Signalgeber (12, 13) angeordnet ist, der ein von der elastischen Verformung des Wandelementes (8) abhängiges Signal erzeugt, dadurch gekennzeichnet, dass das druckempfindliche, elastisch verformbare Wandelement (8) auf der dem Ausgang (3) des Mahlwerks (1) unmittelbar gegenüberliegenden Seite der Dosierkammer (4) in direkter Verlängerung der Auswurfrichtung des Mahlgutes angeordnet ist, und dass die Dosierkammer (4) als Auslass ein verschwenkbares Bodenteil (7) aufweist, das vom Signalgeber (12, 13) gesteuert entriegelbar ist.

2. Vorrichtung nach Anspruch 1, dadurch gekennzeichnet, dass das elastisch verformbare Wandelement (8) als nach aussen gewölbte Federplatte ausgebildet ist, welche an einer Seite (9) eingespannt ist.

3. Vorrichtung nach Anspruch 1, dadurch gekennzeichnet, dass bei Entriegelung des Bodenteiles (7) vom elastisch verformten Wandelement (8) ein Ausschleuderimpuls auf das in der Dosierkammer (4) enthaltene Mahlgut ausgeübt wird.

## Claims

1. Device with a mill work (1) for metering coffee powder in a coffe machine including a processing chamber (16), comprising a metering chamber (4) situated at the outlet (3) of the mill work (1) and incorporating a pressure sensitive, elastically deformable wall element (8) on which a signal generator (12, 13) is arranged, which produces a signal in response to an elastic deformation of the wall element (8), characterized in that the pressure sensitive elastically deformable wall element (8) is situated at the side of the processing chamber (4) immediately opposite to the outlet (3) of the mill work (1) in the direct extension of the direction of ejection of the milled product, and that the metering chamber (4) comprises a pivotable bottom part (7) which is unlockable under the control of the signal generator (12, 13).

2. Device according to claim 1, characterized in that the elastically deformable wall element (8) is an outwardly bulged spring plate which is clampingly fixed at one edge (9).

3. Device according to claim 1, characterized in that an ejection impulse is imparted to the milled product contained in the metering chamber (4) by the elastically deformed wall element (8) upon unlocking of the bottom part (7).

## Revendications

1. Dispositif comportant un mécanisme broyeur (1) pour le dosage de poudre de café dans une machine à café pourvue d'une chambre de préparation (16), comportant une chambre de dosage (4) placée à la sortie (3) du mécanisme broyeur (1) et présentant un élément de paroi (8) sensible à la pression et déformable élastiquement contre lequel est placé un générateur de signal (12, 13) qui produit un signal dépendant de la déformation élastique de l'élément de paroi (8), caractérisé en ce que l'élément de paroi (8) sensible à la pression et déformable élastiquement est placé sur le côté de la chambre de dosage (4) situé immédiatement en face de la sortie (3) du mécanisme broyeur (1) dans le prolongement direct de la direction d'éjection de la matière moulue, et que la chambre de dosage (4) présente comme sortie un fond basculant (7) qui peut être débloqué sur commande par le générateur de signal (12, 13).

2. Dispositif selon la revendication 1, caractérisé en ce que l'élément de paroi déformable élastiquement (8) est formé d'une plaque élastique cintrée vers l'extérieur qui est encastrée sur un côté (9).

3. Dispositif selon la revendication 1, caractérisé en ce que lors du déblocage du fond (7), l'élément de paroi (8) déformé élastiquement exerce une impulsion d'expulsion sur la matière moulue contenue dans la chambre de dosage (4).

0 139 964